Europäisches Patentamt

European Patent Office

Office européen des brevets

(11) Numéro de publication: **0 240 063 B1**

(12) **FASCICULE DE BREVET EUROPEEN**

(45) Date de publication de fascicule du brevet:
**22.01.92**

(51) Int. Cl.5: **C08G 61/12**, H01B 1/12

(21) Numéro de dépôt: **87200509.5**

(22) Date de dépôt: **20.03.87**

(54) **Polymères conducteurs dérivés de 3-alkylthiophènes procédé pour leur fabrication et dispositifs électroconducteurs les contenant.**

(30) Priorité: **01.04.86 FR 8604744**

(43) Date de publication de la demande:
**07.10.87 Bulletin 87/41**

(45) Mention de la délivrance du brevet:
**22.01.92 Bulletin 92/04**

(84) Etats contractants désignés:
**AT BE CH DE ES FR GB GR IT LI LU NL SE**

(56) Documents cités:
**EP-A- 0 095 973
EP-A- 0 096 612
EP-A- 0 097 893
US-A- 4 501 686
US-A- 4 521 589**

**CHEMICAL ABSTRACTS, vol. 103, no. 20, 18
novembre 1985, page 680, résumé no.
170437k, Columbus, Ohio, US; K.Y. JEN et al.:
"Processible and environmentally stable
conducting polymers", & POLYM. MATER.
SCI. ENG. 1985, Vol.53, p.79-83**

(73) Titulaire: **SOLVAY
Rue du Prince Albert, 33
B-1050 Bruxelles(BE)**

(72) Inventeur: **Lemaire, Marc
rue S. Allende, 30
F-92000 Nanterre(FR)**
Inventeur: **Roncali, Jean
Rue des Bruyères, 10
F-93260 Les Lilas(FR)**
Inventeur: **Garreau, Robert
Rue Montfleury, 12
F-95200 Sarcelles(FR)**
Inventeur: **Garnier, Francis
Villa Remy, 17
F-94500 Champigny(FR)**
Inventeur: **Hannecart, Etienne
Abroretumlaan, 38
B-1980 Tervueren(BE)**

(74) Mandataire: **Nichels, William et al
Solvay Département de la Propriété Industrielle Rue de Ransbeek, 310
B-1120 Bruxelles(BE)**

## Description

La présente invention concerne des polymères conducteurs d'électricité dérivés de 3-alkylthiophènes dont le substituant alkyle comprend de six à neuf atomes de carbone, ainsi qu'un procédé pour leur fabrication.

Elle concerne également des dispositifs électroconducteurs contenant ces polymères.

On a déjà décrit des électrodes obtenues par polymérisation électrochimique, sur un support conducteur, de monomères hétérocycliques possédant au moins un hétérocycle aromatique à 5 chaînons, contenant un seul hétéroatome et substitué par au moins un groupement de type alkyle, alkoxyle, hydroxyle, aryle, aryle substitué, halogène trihalogénométhyle, cyano, amino ou dialkylamino. Ce monomère peut être un dérivé substitué en position 3, en position 4 ou en position 3 et 4 du pyrrole, du thiophène ou du furane, ou un indole substitué sur le noyau phényle par 1 à 4 groupements (demande de brevet français FR-A-2527843).

On a aussi décrit les caractéristiques électrochromiques de polymères dérivés de ces hétérocycles à cinq chaînons, en particulier de ceux dérivés du pyrrole, du thiophène, du 3-méthylthiophène, du 3,4-diméthylthiophène et du 2,2'-dithiophène (F. Garnier et al, Journal of Electroanalytical Chemistry, 148, 1983, pages 299 à 303/US-A-4 501 686/K.Y. Jen et al, Polym. Mater. Sci. Eng. 1985, 53, 79-83).

Certaines applications électriques, telles la réalisation de dispositifs (écrans d'affichage, commutateurs, éléments de mémoire ...) basés sur l'électrochromisme (impliquant une modification des propriétés d'absorption ou de transmission de la lumière du matériau mis en oeuvre, induite par une variation de la tension externe appliquée), d'électrodes de batteries rechargeables, de cellules photovoltaïques, de cellules électrochimiques, etc. exigent des polymères conducteurs aux propriétés particulières.

Ces propriétés particulières sont notamment la réversibilité chimique la plus complète et la stabilité la plus élevée possibles du cycle d'oxydo-réduction entre les formes oxydée et réduite du système polymère-agent dopant. Le temps de commutation le plus court possible entre ces deux formes est également souhaité.

Les polymères conducteurs fabriqués jusqu'à présent et mentionnés plus haut ne sont, à ce point du vue, pas entièrement satisfaisants.

La présente invention vise dès lors à fournir une nouvelle famille de polymères conducteurs présentant, à un degré suffisant, les propriétés particulières sus-mentionnées.

L'invention concerne à cet effet des polymères conducteurs d'électricité contenant des unités récurrentes dérivées de 3-alkyl-thiophènes dont le substituant alkyle comprend de six à neuf atomes de carbone. Ces polymères sont avantageusement les homopolymères constitués exclusivement d'unités récurrentes dérivées d'un seul de ces 3-alkyl-thiophènes.

L'invention concerne également un procédé pour la fabrication de ces polymères selon lequel on polymérise électrochimiquement, par oxydation anodique au sein d'un solvant polaire et en présence d'un électrolyte approprié, un 3-alkylthiophène dont le substituant alkyle comprend de six à neuf atomes de carbone.

Le substituant alkyle des 3-alkyl-thiophènes utilisables comme monomères pour préparer les polymères de l'invention comprend de six à neuf atomes de carbone. Il peut être choisi parmi les radicaux alkyles, linéaires ou ramifiés, de $C_6$ à $C_9$. Il s'agit de préférence du radical n-octyle.

Les monomères utilisables pour fabriquer les polymères selon l'invention peuvent être synthétisés selon des méthodes connues, par exemple par une réaction de couplage de Grignard, au départ de 3-bromothiophène par example, en présence d'un catalyseur à base de complexe de nickel (voir notamment G. Consiglio et al., Tetrahedron, 39, 1983, page 2699 et T. Hagashi et al, J. Amer. Chem. Soc., 104, 1982, page 180).

La préparation des polymères selon l'invention s'effectue par polymérisation électrochimique, généralement dans une cellule d'électrolyse, par oxydation anodique du monomère au sein d'un solvant polaire et en présence d'électrolytes appropriés suivant des techniques conventionnelles (voir par example demande de brevet français FR-A-2527843 et F. Garnier et al., op. cit.).

Selon ces techniques, la concentration en monomères est généralement comprise entre $10^{-3}$ et $10^{-1}$ mole par litre de solvant.

Comme solvants, on utilise de préférence des solvants polaires possédant des propriétés dissolvantes à la fois vis-à-vis du monomère et de l'électrolyte choisi et stables dans le domaine des potentiels appliqués. Des examples de solvants utilisables sont l'acétonitrile, le tétrahydrofurane, le chlorure de méthylène et le nitrobenzène.

Les électrolytes sont généralement choisis parmi les sels conducteurs de formule $C^+A^-$ dans laquelle $C^+$ est un cation et dans laquelle $A^-$ est un anion.

Le cation $C^+$ est choisi de préférence parmi les ions alcalins, les ions $R_4N^+$ et $R_4P^+$ (R étant un radical alkyle, tel que les radicaux éthyle et butyle par example).

L'anion $A^-$ est choisi de préférence parmi les ions $C10_4$ , $AsF_6$ , $SbF_6$ , $So_4^{2-}$, $C_6H_5COO^-$, $C_6H_5SO_3^-$ , $BF_4$ , $PF_6$ et $CF_3SO_3$ .

Des électrolytes typiques sont par exemple les fluoroborates, tels que le tétrafluoroborate de tétraéthylammonium et les perchlorates, tels que le perchlorate de lithium et le perchlorate de tétrabutylammonium.

La concentration en électrolyte est généralement comprise entre $10^{-3}$ et 1 mole par litre de solvant.

La cellule électrochimique au sein de laquelle peut s'effectuer la polymérisation des monomères selon l'invention peut fonctionner dans des conditions potentiostatiques ou galvanostatiques.

Dans le premier cas (contrôle potentiostatique), la cellule comprend, outre la source de courant externe, trois électrodes dont une électrode de référence de contrôle du potentiel.

Au cours de l'électrolyse, une couche de polymère se dépose sur l'élément conducteur utilisé comme anode de la cellule d'électrolyse. Cette anode peut être réalisée en un métal noble, tel que l'or ou le platine, ou en un autre métal, tel que le cuivre, doré ou platiné, le titane, le nickel ou en un verre conducteur (oxyde d'étain, oxydes d'iridium - étain). Après l'électrolyse, on dispose donc en fait d'une électrode constituée par un corps conducteur enrobé par un film de polymère y adhérant et qui contient une certaine proportion de l'anion provenant de l'électrolyte. Le polymère et l'anion forment ainsi un complexe à transfert de charges. La composition chimique du film de polymère peut être représentée par la formule empirique $(M^+A_y)_n$ où $M^+$ représente le monomère, $A^-$ l'anion ou contre-ion, y la proportion en anion dans le polymère exprimée par unité monomérique (c'est-à-dire le taux de dopage) qui, dans le cas des polymères de l'invention peut atteindre aisément la valeur de 0,5, et n le degré de polymérisation généralement impossible à déterminer aisément, compte tenu du caractère insoluble du polymère.

La polymérisation électrochimique du monomère s'effectuant sur l'anode de la cellule d'électrolyse, on ne peut obtenir directement une électrode recouverte d'un polymère dopé par des cations.

On peut, pour obtenir une telle cathode, se servir de l'anode obtenue précédemment et lui faire subir une double réduction. Une première réduction électrochimique est possible juste après la polymérisation en laissant l'anode dans la cellule d'électrolyse et en provoquant la décharge de la cellule. Cette décharge provoque l'extraction des anions "dopant" le polymère. On peut ensuite effectuer une seconde réduction, soit par voie chimique, soit par voie électrochimique. La voie chimique consiste à immerger le polymère dans une solution contenant les cations désirés. Ces cations occuperont les sites laissés vacants par les anions originaux. Ainsi, pour obtenir un polymère "dopé" par exemple par les cations $Li^+$, $Na^+$ ou $K^+$, on peut se servir par exemple d'une solution de naphtalène lithium, de naphtalène sodium ou de naphtalène potassium dans le tétrahydrofuranne. La voie électrochimique consiste généralement à placer l'électrode en tant que cathode dans une cellule d'électrolyse contenant en solution les cations désirés. Ceux-ci viennent s'insérer dans les sites laissés vacants par les anions originaux lorsque l'on provoque l'électrolyse de la solution. Les cations peuvent être par exemple des ions alcalins tels que ceux mentionnés ci-dessus ou des ions complexes tels que $(Bu)_4N^+$ ou $(Et)_4N^+$ issus d'un électrolyte en solution dans un solvant tel que l'acétonitrile ou le tétrahydrofuranne. La concentration en électrolyte dans la solution est généralement comprise entre $10^{-3}$ et 1 mole pour 1 litre de solvant.

Les polymères conducteurs selon l'invention présentent des propriétés de réversibilité du cycle d'oxydo-réduction entre leurs formes oxydées et réduites qui sont tout à fait remarquables et inattendues et qui sont notamment :

- un rapport entre les intensités de courant d'oxydation et de courant de réduction proche de l'unité;
- un temps de commutation entre leurs formes oxydée et réduite (vitesse de dopage-dédopage) de l'ordre de quelques dizaines de millisecondes (ms), le plus souvent égal ou inférieur à 50 ms.
- une stabilité du cyle d'oxydo-réduction telle que ces polymères peuvent subir plus de $1,5.10^6$ cycles tout en conservant encore 80 % de la charge initiale.

Ces propriétés remarquables des polymères conducteurs selon l'invention les rendent particulièrement utilisables pour la réalisation de dispositifs électroconducteurs dont le principe de fonctionnement est basé sur ces propriétés, et qui constituent également un objet de la présente invention.

A titre d'exemples non limitatifs de dispositifs électroconducteurs contenant des polymères conducteurs dérivés de 3-alkyl-thiophènes selon l'invention, on peut citer :

- les dispositifs électrochimiques de stockage d'énergie, tels que batteries d'accumulateurs et piles rechargeables ou non dont les anodes sont constituées d'électrodes revêtues de films desdits polymères dopés par des anions;
- les dispositifs électrochromiques basés sur la modification du spectre optique desdits polymères selon leur état électrochimique, qui se manifeste lors des cycles d'oxydation et de réduction des films de polymères déposés sur les anodes de ces dispositifs lors de la charge et de la décharge; à titre d'exemples de pareils dispositifs électrochimiques, on peut citer les écrans d'affichage (display), les dispositifs optoélectroniques, les mémoires et commutateurs optiques.

L'invention est illustrée par les exemples suivants.

Exemple 1 à 4

Les exemples 1,2 et 4 sont donnés à titre de comparaison.

Par couplage du 3-bromothiophène avec les réactifs de Grignard correspondants, au sein d'éther diéthylique, à température ambiante et en présence d'un complexe catalytique à base de nickel, on synthétise les quatre 3-alkylthiophènes suivants :

le 3-méthylthiophène (au départ de bromure de méthylmagnésium);

le 3-pentylthiophène (au départ de bromure de pentylmagnésium);

le 3-octylthiophène (au départ de bromure d'octylmagnésium);

le 3-décylthiophène (au départ de bromure de décylmagnésium).

Ces quatre 3-alkylthiophènes sont polymérisés électrochimiquement par oxydation anodique sous conditions potentiostatiques dans une cellule traversée par un courant de 5 mA et comprenant trois électrodes. L'anode est une lame de verre sur laquelle a été déposée un film conducteur en platine. La cathode se présente sous la forme d'un fil de platine. Le potentiel de l'anode est fixé à 1,4 V par rapport à l'électrode de référence. La solution électrolytique contient du perchlorate de tétrabutylammonium (0,02 m) et l'alkylthiophène (0,2 M) dissous dans le nitrobenzène. La polymérisation est effectuée sous atmosphère d'argon pendant une durée suffisante pour déposer un film de polymère d'environ 1000 Å d'épaisseur.

Les propriétés électrochimiques des polymères ainsi obtenus sont mesurées à partir du voltammogramme cyclique enregistré au moyen d'un potentiostat PAR modèle 173 et à partir des pics d'intensité enregistrés, avec application d'une charge de 1 mC/cm$^2$ sous des impulsions de tension à onde carrée, sur un oscilloscope Tektronix type 564B. Elles sont rassemblées dans le tableau ci-après.

**Tableau**

| Exemple n° | 1 (comparaison) | 2 (comparaison) | 3 (invention) | 4 (comparaison) |
|---|---|---|---|---|
| Polymère synthétisé | poly(3-méthyl-thiophène) | poly(3-pentyl-thiophène) | poly(3-octyl-thiophène) | poly(3-décyl-thiophène) |
| Rapport $\dfrac{I_{Pa}}{I_{Pc}}$ entre les intensités de courant d'oxydation ($I_{Pa}$) et de réduction ($I_{Pc}$) | 1,55 | 1,45 | 1,25 | 1,63 |
| Pourcentage de charges encore échangées après n cycles | 50 % $n = 10^6$ | 45 % $n = 10^6$ | 80 % $n = 1,6.10^6$ | 30 % $n = 10^6$ |

De plus, le temps de commutation du poly(3-octylthiophène (exemple 3) entre la forme oxydée (légèrement bleutée) et la forme réduite (rouge) n'est que de 50 millisecondes.

Ces résultats démontrent que les poly(3-alkylthiophènes) selon l'invention, en particulier le poly(3-octylthiophène), ont des propriétés électrochimiques (rapport $Ip_a/I_{pc}$ et réversibilité du cycle d'oxydo-réduction) qui les rendent particulièrement utilisables dans les dispositifs électrochimiques de stockage d'énergie et les dispositifs électrochromiques.

**Revendications**

**Revendications pour les Etats contractants suivants : BE, CH, DE, FR, GB, GR, IT, LI, LU, NL, SE**

1. Polymères conducteurs d'électricité contenant des unités récurrentes dérivées de 3-alkylthiophènes caractérisés en ce qu'ils sont des homopolymères constitués exclusivement d'unités récurrentes dérivées d'un 3-alkylthiophène dont le substituant alkyle comprend de six à neuf atomes de carbone.

**2.** Polymères conducteurs selon la revendication 1, caractérisés en ce que les unités récurrentes sont dérivées du 3-n-octylthiophène.

**3.** Procédé pour la fabrication de polymères électroconducteurs selon la revendication 1 ou 2 caractérisé en ce que l'on polymérise électrochimiquement, par oxydation anodique au sein d'un solvant polaire et en présence d'un électrolyte approprié, un monomère choisi parmi les 3-alkylthiophènes dont le substituant alkyle comprend de six à neuf atomes de carbone.

**4.** Procédé selon la revendication 3, caractérisé en ce que le monomère est le 3-n-octylthiophène.

**5.** Dispositifs électroconducteurs contenant un polymère selon la revendication 1 ou 2.

**6.** Dispositifs électrochimiques de stockage d'énergie dont les anodes sont constituées d'électrodes revêtues de films de polymères selon la revendication 1 ou 2 dopés par des anions.

**7.** Dispositifs électrochromiques dont les anodes sont revêtues de films de polymères selon la revendication 1 ou 2.

**Revendications pour les Etats contractants suivants : AT, ES**

**1.** Procédé pour la fabrication de polymères conducteurs d'électricité, homopolymères constitués exclusivement d'unités récurrentes dérivées d'un 3-alkylthiophène dont le substituant alkyle comprend de six à neuf atomes de carbone, caractérisé en ce que l'on polymérise électrochimiquement, par oxydation anodique au sein d'un solvant polaire et en présence d'un électrolyte approprié, un monomère choisi parmi les 3-alkylthiophènes dont le substituant alkyle comprend de six à neuf atomes de carbone.

**2.** Procédé selon la revendication 1, caractérisé en ce que le monomère est le 3-n-octylthiophène.

**3.** Dispositifs électroconducteurs contenant un polymère obtenu selon la revendication 1 ou 2.

**4.** Dispositifs électrochimiques de stockage d'énergie dont les anodes sont constituées d'électrodes revêtues de films de polymères obtenus selon la revendication 1 ou 2 dopés par des anions.

**5.** Dispositifs électrochromiques dont les anodes sont revêtues de films de polymères obtenus selon la revendication 1 ou 2.

**Claims**
**Claims for the following Contracting States : BE, CH, DE, FR, GB, GR, IT, LI, LU, NL, SE**

**1.** Electrically conductive polymers containing repeated units derived from 3-alkylthiophenes, characterised in that they are homopolymers consisting exclusively of repeated units derived from a 3-alkylthiophene in which the alkyl substituent contains from six to nine carbon atoms.

**2.** Conductive polymers according to Claim 1, characterised in that the repeated units are derived from 3-n-octylthiophene.

**3.** Process for manufacturing electroconductive polymers according to Claim 1 or 2, characterised in that a monomer chosen from 3-alkylthiophenes in which the alkyl substituent contains from six to nine carbon atoms is electrochemically polymerised by anodic oxidation in a polar solvent and in the presence of a suitable electrolyte.

**4.** Process according to Claim 3, characterised in that the monomer is 3-n-octylthiophene.

**5.** Electroconductive devices containing a polymer according to Claim 1 or 2.

**6.** Electrochemical devices for energy storage, in which the anodes consist of electrodes coated with films of polymers according to Claim 1 or 2, doped with anions.

7. Electrochromic devices in which the anodes are coated with films of polymers according to Claim 1 or 2.

**Claims for the following Contracting States : AT, ES**

1. Process for the manufacture of electrically conductive polymers which are homopolymers consisting exclusively of repeated units derived from a 3-alkylthiophene in which the alkyl substituent contains from six to nine carbon atoms, characterised in that a monomer chosen from 3-alkylthiophenes in which the alkyl substituent contains from six to nine carbon atoms is electrochemically polymerised by anodic oxidation in a polar solvent and in the presence of a suitable electrolyte.

2. Process according to Claim 1, characterised in that the monomer is 3-n-octylthiophene.

3. Electroconductive devices containing a polymer obtained according to Claim 1 or 2.

4. Electrochemical devices for energy storage, in which the anodes consist of electrodes coated with films of polymers obtained according to Claim 1 or 2, doped with anions.

5. Electrochromic devices in which the anodes are coated with films of polymers according to Claim 1 or 2.

**Patentansprüche**
**Patentansprüche für folgende Vertragsstaaten : BE, CH, DE, FR, GB, GR, IT, LI, LU, NL, SE**

1. Elektrisch leitfähige Polymere, die wiederkehrende Einheiten, abgeleitet von 3-Alkylthiophenen, enthalten, dadurch gekennzeichnet, daß sie Homopolymere sind, die ausschließlich aus wiederkehrenden Einheiten, abgeleitet von einem 3-Alkylthiophen, dessen Alkylsubstituent sechs bis neun Kohlenstoffatome umfaßt, gebildet sind.

2. Leitfähige Polymere nach Anspruch 1, dadurch gekennzeichnet, daß die wiederkehrenden Einheiten vom 3-n-Octylthiophen abgeleitet sind.

3. Verfahren zur Herstellung von elektrisch leitfähigen Polymeren nach Anspruch 1 oder 2, dadurch gekennzeichnet, daß man durch anodische Oxidation in einem polaren Lösungsmittel und in Anwesenheit eines geeigneten Elektrolyten, ein Monomer, ausgewählt unter den 3-Alkylthiophenen, deren Alkylsubstituent sechs bis neun Kohlenstoffatome umfaßt, elektrochemisch polymerisiert.

4. Verfahren nach Anspruch 3, dadurch gekennzeichnet, daß das Monomer das 3-n-Octylthiophen ist.

5. Elektrisch leitfähige Vorrichtungen, die ein Polymer nach Anspruch 1 oder 2 umfassen.

6. Elektrochemische Vorrichtungen zur Energiespeicherung, deren Anoden aus Elektroden gebildet sind, die mit Filmen von mit Anionen dotierten Polymeren nach Anspruch 1 oder 2 beschichtet sind.

7. Elektrochrome Vorrichtungen, deren Anoden mit Filmen von Polymeren nach Anspruch 1 oder 2 beschichtet sind.

**Patentansprüche für folgende Vertragsstaaten : AT, ES**

1. Verfahren zur Herstellung von elektrisch leitfähige Polymere, die Homopolymere sind gebildet aus ausschliesslich wiederkehrenden Einheiten, abgeleitet von einem 3-Alkylthiophen, dessen Alkylsubstituent sechs bis neun Kohlenstoffatome umfasst, dadurch gekennzeichnet, dass man durch anodische Oxidation in einem polaren Lösungsmittel und in Anwesenheit eines geeigneten Elektrolyten, ein Monomer, ausgewählt unter den 3-Alkylthiophenen, deren Alkylsubstituent sechs bis neun Kohlenstoffatome umfasst, elektrochemisch polymerisiert.

2. Verfahren nach Anspruch 1, dadurch gekennzeichnet, dass das Monomer das 3-n-Octylthiophen ist.

3. Elektrisch leitfähige Vorrichtungen, die ein nach Anspruch 1 oder 2 herstellte Polymere umfassen.

4. Elektrochemische Vorrichtungen zur Energiespeicherung, deren Anoden aus Elektroden gebildet sind, die mit Filmen von mit Anionen dotierten Polymeren beschichtet sind die nach Anspruch 1 oder 2 herstellte sind.

5. Elektrochrome Vorrichtungen, deren Anoden mit Filmen von nach Anspruch 1 oder 2 herstellte Polymeren beschichtet sind.